# EUROPÄISCHE PATENTSCHRIFT

(11) **EP 1 987 736 B1**
(45) Veröffentlichungstag und Bekanntmachung des Hinweises auf die Patenterteilung: **17.02.2010**
(21) Anmeldenummer: 07009063.4
(22) Anmeldetag: 04.05.2007
(51) Int. Cl.: A47B 81/06, A47F 7/14

(54) **Vorrichtung zum Aufbewahren flacher Gegenstände**
Device for storing flat objects
Dispositif de stockage d'objets plats

(43) Veröffentlichungstag der Anmeldung: 05.11.2008
(73) Patentinhaber: Engelbrecht, Moritz, 80337 München (DE)
(72) Erfinder: Engelbrecht, Moritz, 80337 München (DE)
(74) Vertreter: Caspary, Karsten

(56) Entgegenhaltungen:
- EP-A- 0 793 928
- DE-A1- 19 619 372
- DE-U1- 29 818 616
- GB-A- 2 285 434

## Beschreibung

Die Erfindung betrifft eine Vorrichtung zum Aufbewahren flacher Gegenstände, wie Karteikarten, CDs und DVDs, bestehend aus einem Aufnahmeraum und zwei diesen seitlich begrenzenden, länglichen Begrenzungselementen und wenigstens einem beweglichen Raumteilerelement, das sich zwischen den Begrenzungselementen erstreckt, an den Begrenzungselementen in einer aus der Senkrechten zu dem Boden des Aufnahmeraums abweichenden Neigungsstellung abgestützt ist und in mehreren Stellungen längs der Begrenzungselemente feststellbar ist.

Vorrichtungen dieser Art sind allgemein bekannt, beispielsweise als Karteikästen oder als Einsätze in Schubladen für die Aufnahme von Karteikarten. Bei diesen Vorrichtungen bestehen die Raumteilerelemente aus Kunststoffplatten oder Blechen, die für eine Lagefixierung in Schlitzen stecken, die im Boden oder an den seitlichen Begrenzungselementen der Vorrichtung ausgebildet sind. Bei Karteikästen sind die Raumteilerelemente im allgemeinen zwischen einer nach vorn und einer nach hinten geneigten Stellungschwenkbar, um das Studium der Karteikarten zu erleichtern, wobei sich das Raumteilerelement in den Neigungsstellungen an den seitlichen Begrenzungselementen abstützt.

Für die Aufbewahrung von CDs oder DVDs, insbesondere zur Präsentation derselben in Verkaufslokalen, sind Vorrichtungen bekannt, bei denen der Boden mit einer Wellenstruktur in einem Raster versehen ist, das der Dicke der Verpackungen für diese Medien entspricht. Raumteilerelemente sind in diesen Vorrichtungen in Schlitze eingesteckt, die in dem wellenförmigen Boden ausgebildet sind.

Bei einer Aufbewahrungsvorrichtung der eingangs genannten Art für CDs, die aus GB 2 285 434 A bekannt ist, sind im mit Querrippen versehenen Boden des Aufnahmeraums zwei parallel zueinander verlaufende Längsschlitze ausgebildet. Raumteilerplatten zur Unterteilung des Aufnahmeraums haben seitliche Schultern, die sich bei Schrägstellung im Zahngrund von zwei an den Längsseiten des Aufnahmeraums ausgebildeten Zahnleisten abstützen können. Die Raumteilerplatten haben weiterhin Füße, die sich durch die Längsschlitze im Boden erstrecken und in diesen durch seitlich vorstehende Nasen gesichert sind. Durch Aufrichten lassen sich die Raumteilerplatten längs des Aufnahmeraums verstellen. Dazu müssen die Raumteilerplatten zusätzlich angehoben werden, um ihre Schultern über die Zähne hinweg zu heben.

Wenn in einer Vorrichtung zur Aufbewahrung solcher Gegenstände, beispielsweise in einer Schublade, der Aufnahmeraum nicht vollständig gefüllt ist, dienen Raumteilerelemente auch dazu, den genutzten Raum zu begrenzen, um ein Umfallen der aufbewahrten Gegenstände zu verhindern. Das erfordert beim Hinzufügen beispielsweise einer neuen CD in eine Sammlung, das Raumteilerelement in eine neue Stellung zu bringen, um Platz für die neu aufzunehmende CD zu schaffen. Bei den bekannten Vorrichtungen ist dieses ein mitunter mühsamer Vorgang. Auch sind festgelegte Raster, wie in GB 2 285 434 A durch die Zahnteilung der Zahnleisten vorgegeben in vielen Fällen unpraktisch, insbesondere bei der Aufbewahrung von CDs, da die Dickenabmessungen der CD-Verpackungen nicht einheitlich sind.

Der Erfindung liegt die Aufgabe zugrunde, eine Vorrichtung der eingangs genannten Art anzugeben, die vielseitig einsetzbar ist und bei der Reponierung von Raumteilerelementen keine komplizierten Hangriffe erfordert. Darüber hinaus soll die Vorrichtung technisch einfach herstellbar sein.

Diese Aufgabe wird durch die im Anspruch 1 angegebenen Merkmale gelöst. Vorteilhafte Ausgestaltungen der Erfindung sind Gegenstand der abhängigen Ansprüche.

Die Erfindung gibt eine Vorrichtung an, bei der die Raumteilerelemente stufenlos verstellt werden können, ohne dass es notwendig ist, irgendwelche Demontagen vorzunehmen. Wesentlich für die Erfindung ist, dass jedes Raumteilerelement mit den seitlichen Begrenzungselementen des Aufnahmeraums für die aufzubewahrenden Gegenstände jeweils durch einen Selbsthaltemechanismus verbunden ist, der das Raumteilerelement in seiner geneigten Stellung, die es unter Schwerkraftwirkung von selbst einnimmt, an den Begrenzungselementen so fixiert, dass es sich nicht längs der Begrenzungselemente verschiebt.

Zum Verstellen eines Raumteilerelements, beispielsweise um mehr Platz zur Aufnahme weiterer Gegenstände zu schaffen, ist es lediglich erforderlich, das Raumteilerelement in eine zum Boden des Aufnahmeraums etwa senkrechte Stellung zu schwenken, weil dadurch die Klemmwirkung des Haltemechanismus zwischen Raumteilerelement und seitlichen Begrenzungselementen aufgehoben wird. Dieses Verschwenken kann speziell bei der Verwendung der Vorrichtung zum Aufbewahren von CDs dadurch erreicht werden, dass man die betreffende CD, genauer gesagt, die Kunststoffverpackungshülle der CD, in den V-förmigen Spalt hineindrückt, den man durch Aufklappen der CD-Sammlung zwischen zwei benachbarten CDs geschaffen hat. Das hat zur Folge, dass sich die angrenzenden CDs und mit ihnen das diese abstützende Raumteilerelement aus ihrer Neigungsstellung aufrichten und sich in Richtung auf das Raumteilerelement verschieben und dieses dabei wegdrücken.

Es ist von Vorteil, wenn das Raumteilerelement mit einer Parallelführungseinrichtung ausgerüstet ist, damit sich das Raumteilerelement nicht zwischen den seitlichen Begrenzungselementen verkanten kann, sondern sich immer senkrecht zu ihnen ausrichtet. Durch besondere Maßnahmen, die später noch im Einzelnen erläutert werden, kann dennoch Sorge getragen sein, dass sich die Raumteilerelemente aus der Vorrichtung vollständig entnehmen lassen.

Die Raumteilerelemente sind vorzugsweise Bleche, die vorzugsweise pulverbeschichtet sind. Die seitlichen Begrenzungselemente des Aufnahmeraums sind vorzugsweise stranggepresste Profile, vorzugsweise aus Aluminium und noch besser mit eloxierter Oberfläche. Man erkennt, dass sich diese Einzelteile mit geringem Aufwand herstellen lassen. Die Pulverbeschichtung der Bleche schafft einen gewissen Reibungskoeffizient, und die Eloxierung der Begrenzungselemente schafft eine vorteilhafte Oberflächenhärte. Der erhöhte Reibungskoeffizient wirkt einem selbsttätigen Verschieben der Raumteilerelemente entgegen, und die Eloxierung schafft aufgrund ihrer Härte einen Oberflächenschut, der die Entstehung von Gebrauchsspuren weitgehend verhindert.

Die Erfindung wird nachfolgend unter Bezugnahme auf in den Zeichnungen dargestellte Ausführungsformen näher erläutert. Es zeigt:
Fig. 1 eine perspektivische Ansicht einer ersten Ausführungsform der Erfindung mit darin eingestellten flachen Gegenständen;
Fig. 2 eine perspektivische Darstellung eines Raumteilerelements und Teilstücke zweier Begrenzungselemente in Form von Schienen;
Fig. 3 einen Blick in eine mit der erfindungsgemäßen Vorrichtung ausgerüsteten Schublade von der Seite;
Fig. 4 eine der Fig. 2 vergleichbare Ansicht einer zweiten Ausführungsform der Erfindung, und
Fig. 5 eine Abwandlung der in Fig. 4 gezeigten zweiten Ausführungsform der Erfindung.

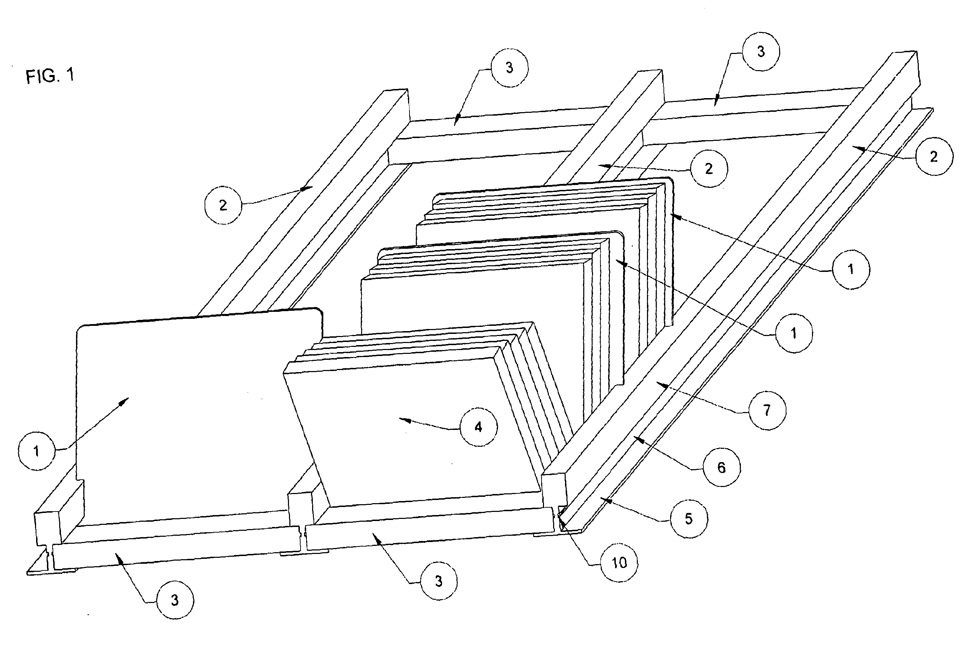

In Fig. 1 erkennt man eine erfindungsgemäße Vorrichtung, die als Einsatz für eine Schublade verwendbar ist. Die Vorrichtung ist hier als eine Zwillingsvorrichtung ausgebildet, d.h. sie hat zwei nebeneinander angeordnete Aufnahmeräume für die aufzubewahrenden flachen Gegenstände, im vorliegenden Falle CDs in ihren Kunststoffhüllen.

Die Vorrichtung soll nachfolgend im Wesentlichen nur am Beispiel eines einzelnen Aufnahmeraums beschrieben werden.

Die Vorrichtung hat im dargestellten Beispiel zwei Raumteilerelemente 1, die zwischen zwei seitlichen, länglichen, schienenförmigen Begrenzungselementen 2 angeordnet sind und durch zwei Abstandshalter 3 in einem vorbestimmten Abstand gehalten sind. Die Begrenzungselemente 2 begrenzen den Aufnahmeraum zu beiden Seiten, der zur Aufnahme von CDs in ihren Verpackungen 4 (nachfolgend kurz CDs 4) bestimmt ist. Der lichte Abstand zwischen den Begrenzungselementen 2 ist ausreichend größer als die Breite der aufzunehmenden CDs 4.

Gemäß Fig. 1 sind die Begrenzungselemente 2 von Eisenbahnschienen ähnlichen Profilen gebildet und sollen daher nachfolgend Schienen genannt werden. Diese Schienen haben einen Fuß 5, einen Steg 6 und einen Kopf 7 und können an ihrem Fuß 5 auf einer Unterlage, beispielsweise dem Boden einer Schublade (nicht dargestellt) befestigt sein.

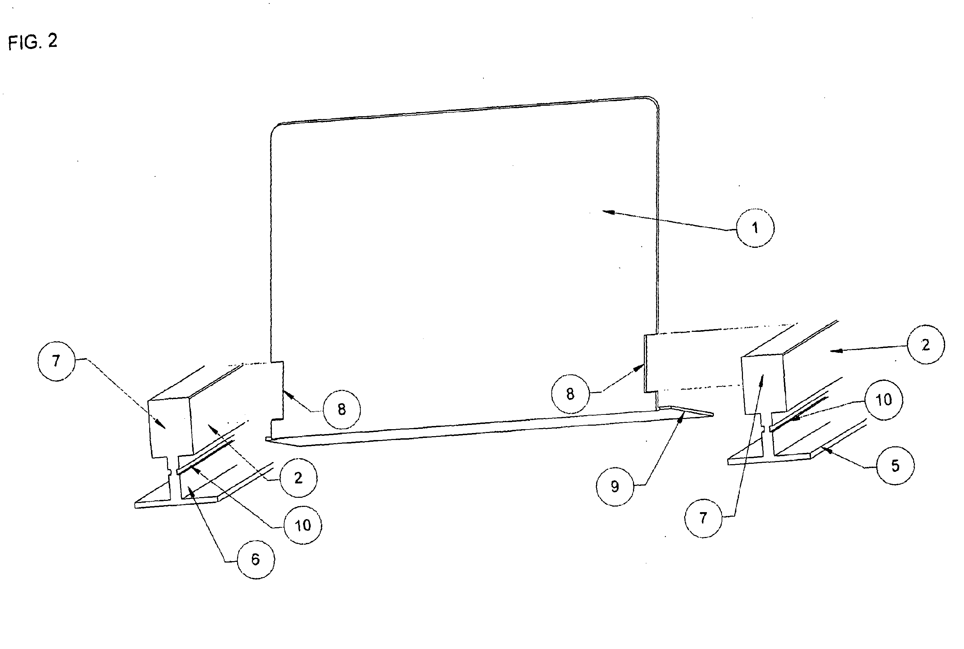

Wie man aus Fig. 1 erkennt, sind die Raumteilerelemente 1, die hier als flache Platten ausgebildet sind, etwas breiter, als der lichte Abstand zwischen den Köpfen 7 der Schienen 2. Sie haben daher Ausschnitte, in die die Köpfe 7 der Schienen 2 eingreifen. Zur weiteren Beschreibung dieser Merkmale wird auf Fig. 2 Bezug genommen.

Im dargestellten Beispiel ist die mittlere Schiene 2 zugleich das Begrenzungselement für den in der Zeichnung links liegenden Aufnahmeraum.

Wie man in Fig. 2 erkennt, hat das Raumteilerelement 1 ein Oberteil, das sich über die Köpfe 7 der Schienen 2 erhebt, und einen Fußbereich, an dem das Raumteilerelement 1 an den Schienen 7 gehalten ist. Zu diesem Zweck hat das Raumteilerelement 1 im Fußbereich beidseitig eine Ausnehmung 8. Die Höhe dieser Ausnehmung ist größer bemessen, als die Höhe des Kopfes 7 der Schiene 2, und zwar um eine solche Differenz, dass in einer geneigten Stellung, die um etwa 15° von der Vertikalen auf die Oberseite des Schienenkopfes 7 abweicht, die oberen und unteren Begrenzungsränder der hier rechteckigen Ausnehmungen 8 an den Ober- und Unterseiten der Schienenköpfe 7 anliegen. In dieser Stellung ist der von der Erfindung angestrebte Selbstklemmeffekt erreicht, d.h., das Raumteilerelement 1 gibt einem in Längsrichtung der Schienen 2 wirkenden Druck nicht nach, sondern klemmt sich an den Schienenköpfen 7. Der Fachmann erkennt, dass wenn man das Raumteilerelement 1 in die Vertikale schwenkt, es ohne Schwierigkeit längs der Schienen 2 verschiebbar ist.

Um zu verhindern, dass sich das Raumteilerelement 1 in einer Stellung arretiert, in der es seitlich gegenüber den Schienen 2 verkantet ist, d.h. in einer Stellung, in der ihr unterer Rand nicht senkrecht zur Längserstreckung der Schienen 2 verläuft, hat das Raumteilerelement 1 am unteren Ende seines Fußbereichs eine um 90° abgewinkelte Verlängerung 9, die dazu bestimmt ist, mit ihren seitlichen Rändern das Raumteilerelement 1 an den Seitenwänden der Stege 6 zu führen. In einer Höhenlage, die die Verlängerung 9 einnimmt, wenn das Raumteilerelement 1 in die Vertikale geschwenkt ist, haben die Stege 6 der Schienen 2 jeweils eine Nut 10 auf wenigstens einer Seite, die ausreichend breit ist, die Verlängerung 9 aufzunehmen. In der vertikalen Stellung des Raumteilerelements 1 ist es somit möglich, das Raumteilerelement 1 etwas zu verdrehen, wobei die Verlängerung 9 an einer ihrer Seiten in die benachbarte Nut eintritt, um es dadurch zu ermöglichen, das Raumteilerelement aus der Verbindung mit den beiden Schienen 2 zu lösen.

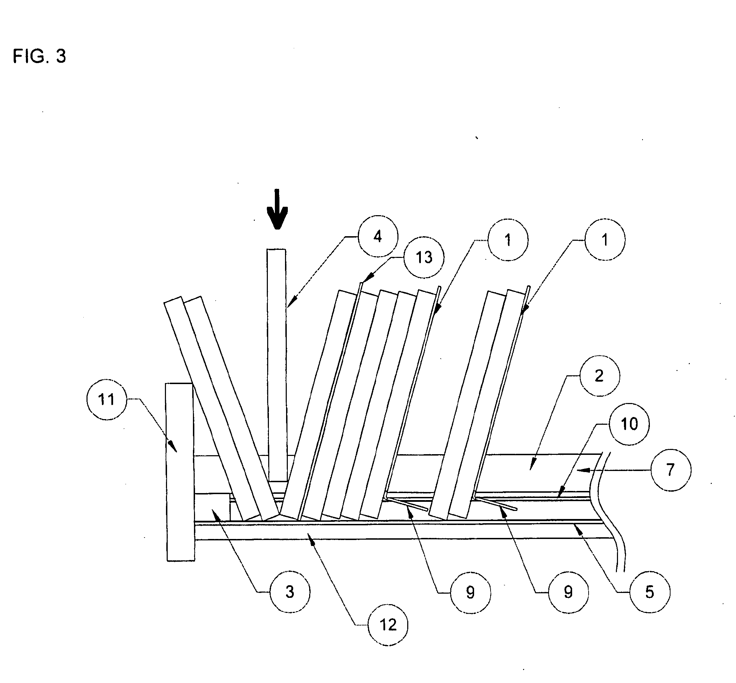

Fig. 3 zeigt eine Seitenansicht einer in eine Schublade eingebauten Vorrichtung gemäß der Erfindung. Von der Schublade erkennt man eine Vorderwand 11 und einen Boden 12, auf dem die Schienen 2 befestigt sind. Es sind zwei Raumteilerelemente 1 zu erkennen, die sich in einer geneigten Stellung befinden, in der sie sich an den Schienen 2 festgeklemmt haben. Die Raumteilerelemente 1 stützen eine Reihe von CDs 4 sowie eine Trennkarte 13 ab, die sich zwischen zwei CDs 4 befindet. Die CDs 4 sind um etwa 15° aus der Senkrechten geneigt, was durch die erläuterte Dimensionierung der Raumteilerelemente 1 in Bezug auf die Schienen 2 bestimmt ist. Man sieht ferner, dass durch Schwenken nach vorn zweier CDs 4 gegen die Vorderwand 11 der Schublade ein V-förmiger Zwischenraum gebildet worden ist, in den eine weitere CD 4 in Richtung des Pfeiles eingeschoben werden kann. Da der Angriffspunkt dieser CD an den benachbarten CDs unterhalb der Mitte des Schienenkopfes 7 liegt, hat das zur Folge, dass sich die der einzuschiebenden CD benachbarten CDs aufrichten und dabei den abstützenden Raumteiler 1 nach rechts verschieben.

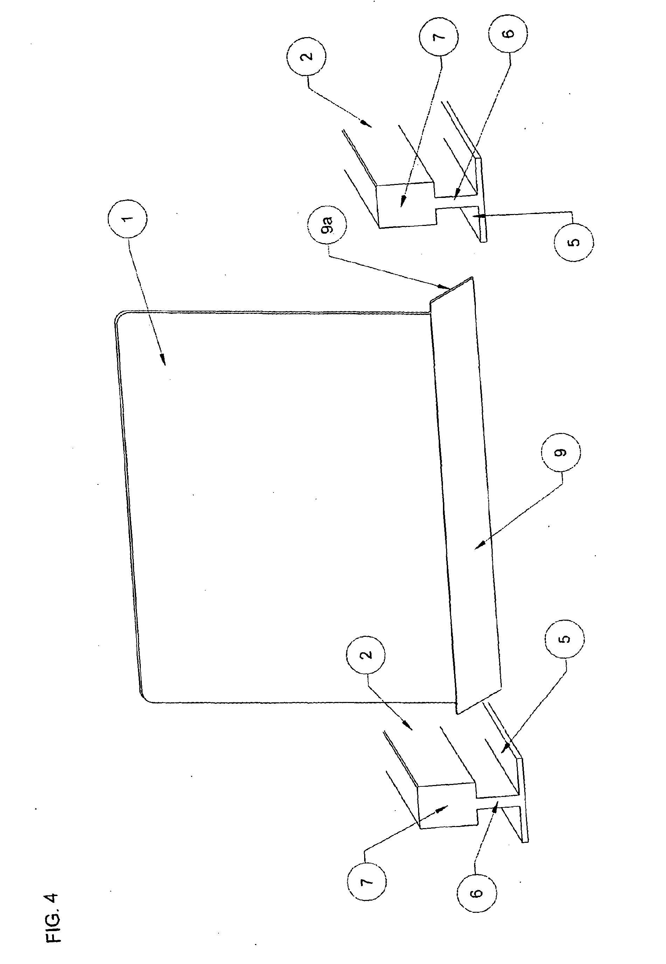

Figur 4 zeigt eine zweite Ausführungsform der Erfindung. Sie unterscheidet sich von der nach den Figuren 1 bis 3 dadurch, dass die Lage der vorspringenden und der aufnehmenden Bestandteile des Selbstklemm- und Haltemechanismus am Raumteilerelement 1 und an den Schienen 2 vertauscht sind. Das Raumteilerelement 1 hat in seinem Fußbereich eine abgewinkelte Verlängerung 9, die breiter ist, als das übrige Raumteilerelement 1 und daher in den Raum eingreift, der zwischen dem Fuß 5 und dem Kopf 7 der Schiene 2 ausgebildet und seitlich von deren Steg 6 begrenzt ist. Wieder ist die Höhenabmessung der Verlängerung 9 wenigstens in ihren seitlich vorstehenden Abschnitten 9a in Bezug auf den Abstand zwischen dem Fuß 5 und dem Kopf 7 der Schiene 2 so bemessen, dass in einer vorgegebenen Neigungsstellung von beispielsweise 15° gegen die Senkrechte auf die Unterlage, auf der sich die Schienen 2 befinden, die oberen und unteren Kanten der seitlichen Vorsprünge 9a der Verlängerung 9 an der Unterseite des Kopfes 7 und der Oberseite des Fußes 5 der Schienen 2 anliegen. In dieser Stellung ist dann das Raumteilerelement 1 gegen ein Verschieben in Längsrichtung der Schienen 2 gesperrt.

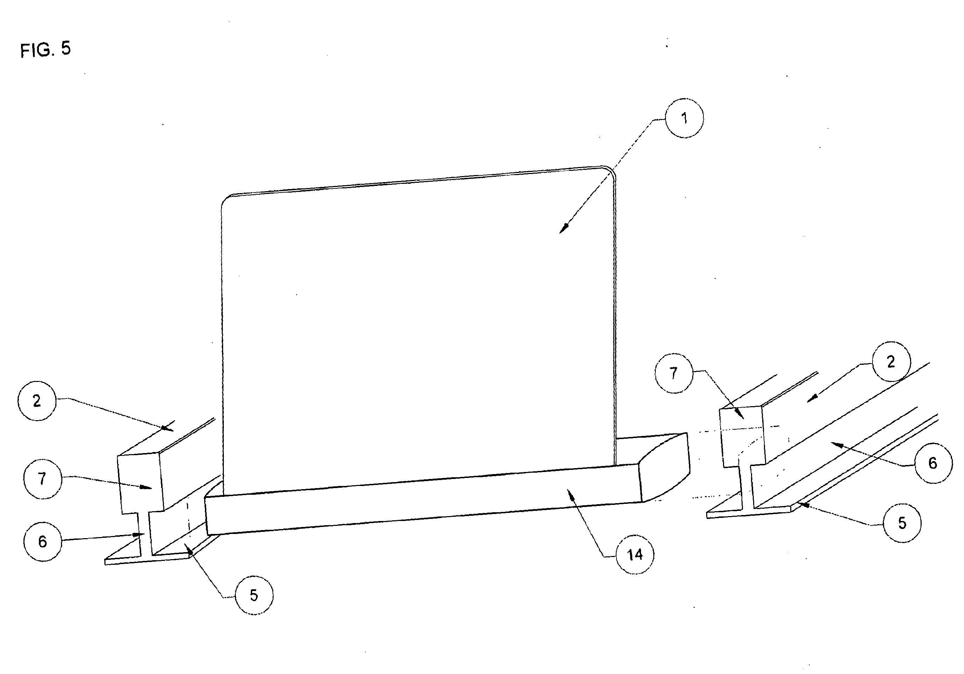

Figur 5 zeigt eine Variante der Ausführungsform von Figur 4. Bei dieser Variante hat das Raumteilerelement 1 einen relativ voluminösen Fuß 14, der in Form einer Leiste ausgebildet ist, die leicht ballige Ober- und Unterseiten hat. Die Querschnittsabmessungen des Fußes 14 sind derart gewählt, dass der Fuß 14 in den Zwischenraum passt, der zwischen dem Fuß 5 und dem Kopf 7 der Schienen 2 von deren Stegen 6 ausgebildet ist. Die ballige Ausführung des Fußes 14 soll ein Schwenken des Raumteilerelements 1 zwischen den verschiedenen Stellungen analog dem, was in den Figuren 1 und 3 dargestellt ist, erleichtern. Die untere Hinterkante des Fußes 14 bewirkt im nach hinten geschwenkten Zustand des Raumteilerelements 1 eine Selbstsperrung desselben an den Unterseiten der Schienenköpfe 7.

## Patentansprüche

1. Vorrichtung zum Aufbewahren flacher Gegenstände, wie Karteikarten, CDs oder DVDs, bestehend aus einem Aufnahmeraum und zwei diesen seitlich begrenzenden, länglichen Begrenzungselementen (2) und wenigstens einem beweglichen Raumteilerelement (1), das sich zwischen den Begrenzungselementen (2) erstreckt, an den Begrenzungselementen (2) in einer aus der Senkrechten auf den Boden des Aufnahmeraums abweichenden Neigungsstellung abgestützt ist und in mehreren Stellungen längs der Begrenzungselemente (2) arretierbar ist, **dadurch gekennzeichnet, dass** die Begrenzungselemente (2) und das Raumteilerelement (1) miteinander jeweils durch einen selbstklemmenden Haltemechanismus (7, 8) verbunden sind, bestehend aus einem seitlichen Vorsprung an dem einen Element und einer den Vorsprung aufnehmenden Ausnehmung an dem anderen Element, wobei der an dem Begrenzungselement (1) ausgebildete Bestandteil dieses Haltemechanismus als längslaufende Leiste bzw. längslaufende Ausnehmung ausgebildet ist und die Bestandteile des Selbstklemmmechanismus in einer sich im wesentlichen senkrecht zur Längserstreckung und senkrecht zur Quererstreckung des Aufnahmeraums erstreckenden Richtung derart dimensioniert sind, dass in einer senkrecht zum Boden des Aufnahmeraums ausgerichteten Lage des Raumteilerelements (1) ein eine Verschiebung desselben ermöglichendes Spiel zwischen den Bestandteilen des Selbsthaltemechanismus vorhanden ist und die Neigungsstellung des Raumteilerelements (1) gegen die Senkrechte auf den Boden des Aufnahmeraums allein durch den Selbstklemmmechanismus (7, 8) bestimmt ist.

2. Vorrichtung nach Anspruch 1, **dadurch gekennzeichnet, dass** an dem Raumteilerelement (1) eine sich an die Begrenzungselemente (2) anlegende Parallelführungseinrichtung (9) ausgebildet ist.

3. Vorrichtung nach Anspruch 1, **dadurch gekennzeichnet, dass** das Raumteilerelement (1) ein Blech ist, mit einem Oberteil und einem Fußbereich, der an der Seite beidseitig je eine Ausnehmung (8) aufweist, in die jeweils eine an dem benachbarten Begrenzungselement (2) seitlich ausgebildete Leiste (7) eingreift.

4. Vorrichtung nach Anspruch 3, **dadurch gekennzeichnet, dass** am unteren Ende des Fußbereichs des Raumteilerelements (1) eine im wesentlichen vertikal zum Fußbereich abgewinkelte Verlängerung (9) ausgebildet ist, die seitlich an den benachbarten Begrenzungselementen (2) geführt ist.

5. Vorrichtung nach Anspruch 4, **dadurch gekennzeichnet, dass** in wenigstens einem der Begrenzungselemente (2) eine längslaufende Nut (10) in einer Höhenlage ausgebildet ist, die die Verlängerung (9) des Raumteilerelements (1) in der zum Boden des Aufnahmeraums senkrechten Stellung des Raumteilerelements (1) einnimmt, und die eine Breite hat, die größer ist, als die Dicke der Verlängerung (9).

6. Vorrichtung nach Anspruch 5, **dadurch gekennzeichnet, dass** die Ausnehmung (8) an der der Nut (10) abgewandten Seite des Blechs (1) um etwa die Nuttiefe größer ist, als die Tiefe der benachbarten Leiste (7).

7. Vorrichtung nach einem der Ansprüche 3 bis 6, **dadurch gekennzeichnet, dass** die Begrenzungselemente (2) aus Eisenbahnschienen ähnlichen Profilen bestehen, deren Schienenköpfe (7) sich seitlich in die Ausnehmungen (8) am Raumteilerelement (1) einfügen.

8. Vorrichtung nach Anspruch 1, **dadurch gekennzeichnet, dass** die Begrenzungselemente (2) aus Eisenbahnschienen ähnlichen Profilen bestehen, in deren unter dem Schienenkopf (7) befindlichen, vom Schienensteg (6) seitlich begrenzten Raum sich jeweils ein am Raumteilerelement (1) seitlich ausgebildeter Vorsprung (9a) einfügt.

9. Vorrichtung nach Anspruch 8, **dadurch gekennzeichnet, dass** das Raumteilerelement (1) von einem Blech gebildet ist, bestehend aus einem Oberteil und einem Fußbereich, der mit einer sich zwischen den Begrenzungselementen (2) erstreckenden Fußleiste (14) verbunden ist, die beiderseits seitlich gegenüber dem Blech (1) vorsteht und sich in den unter dem Schienenkopf (7) befindlichen, vom Schienensteg (6) seitlich begrenzten Raum einfügt.

10. Vorrichtung nach einem der Ansprüche 3 bis 9, **dadurch gekennzeichnet, dass** die Begrenzungselemente (2) aus eloxiertem Aluminium bestehen.

11. Vorrichtung nach einem der vorhergehenden Ansprüche, **dadurch gekennzeichnet, dass** Raumteilerelement (1) aus einem pulverbeschichteten Blech besteht.

12. Vorrichtung nach einem der vorhergehenden Ansprüche, **dadurch gekennzeichnet, dass** die Neigungsstellung des Raumteilerelements (1) von der Senkrechten auf den Boden des Aufnahmeraums um etwa 15° abweicht.

## Claims

1. Device for storing flat objects such as index cards, CDs or DVDs, consisting of a receiving compartment and two elongate boundary members (2) which laterally delimit said receiving compartment, and at least one movable compartment dividing member (1) which extends between the boundary members (2), is supported on the boundary members (2) in an inclined position diverging from the perpendicular on the bottom of the receiving compartment and can be locked in a plurality of positions along the boundary members (2), **characterised in that** the boundary members (2) and the compartment dividing member (1) are connected together in each case by a self-locking holding mechanism (7, 8), consisting of a lateral projection on one member and a recess receiving the projection in the other member, the component of this holding mechanism formed on the boundary member (1) being configured as a longitudinally-extending cover strip or longitudinally-extending recess and the components of the self-locking mechanism being configured in a direction which extends substantially vertically to the longitudinal extent and vertically to the transverse extent of the receiving compartment such that in a position of the compartment dividing member (1) oriented vertically to the bottom of the receiving compartment there is a clearance, which allows a displacement of said compartment dividing member (1), between the components of the self-holding mechanism, and the inclined position of the compartment dividing member (1) with respect to the perpendicular on the bottom of the receiving compartment is determined alone by the self-locking mechanism (7, 8).

2. Device according to claim 1, **characterised in that** configured on the compartment dividing member (1) is a parallel guide means (9) which rests against the boundary members (2).

3. Device according to claim 1, **characterised in that** the compartment dividing member (1) is a metal sheet, having an upper part and a foot region which has a respective recess (8) in both sides into which a respective cover strip (7) formed laterally on the adjacent boundary member (2) engages.

4. Device according to claim 3, **characterised in that** configured on the lower end of the foot region of the compartment dividing member (1) is an extension (9) which is bent substantially vertically to the foot region and is guided laterally on the adjacent boundary members (2).

5. Device according to claim 4, **characterised in that** configured in at least one of the boundary members (2) is a longitudinally-extending groove (10) in an elevation position which the extension (9) of the compartment dividing member (1) occupies in the position of the compartment dividing member (1) which is vertical to the bottom of the receiving compartment, and which has a width greater than the thickness of the extension (9).

6. Device according to claim 5, **characterised in that** the recess (8) in the side of the metal sheet (1) remote from the groove (10) is greater by approximately the groove depth than the depth of the adjacent cover strip (7).

7. Device according to any one of claims 3 to 6, **characterised in that** the boundary members (2) consist of profiles similar to railway tracks, the rail heads (7) of which fit laterally into the recesses (8) in the compartment dividing member (1).

8. Device according to claim 1, **characterised in that** the boundary members (2) consist of profiles similar to railway tracks, in the space thereof located below the rail head (7) and laterally delimited by the rail stem (6) a respective projection (9a) fits which is configured laterally on the compartment dividing member (1).

9. Device according to claim 8, **characterised in that** the compartment dividing member (1) is formed by a metal sheet, consisting of an upper part and a foot region which is connected to a skirting (14) which extends between the boundary members (2) and projects laterally on each side with respect to the metal sheet (1) and fits into the space which is located below the rail head (7) and is laterally delimited by the rail stem (6).

10. Device according to any one of claims 3 to 9, **characterised in that** the boundary members (2) consist of anodised aluminium.

11. Device according to any one of the preceding claims, **characterised in that** the compartment dividing member (1) consists of a powder-coated metal sheet.

12. Device according to any one of the preceding claims, **characterised in that** the inclined position of the compartment dividing member (1) diverges from the perpendicular on the bottom of the receiving compartment by approximately 15 °.

## Revendications

1. Dispositif pour l'entreposage d'objets plats, tels que des fiches bristol, CD ou DVD, constitué d'un espace de réception et de deux éléments de délimitation allongés (2) délimitant latéralement ce dernier, et d'au moins un élément de séparation (1) mobile qui s'étend entre les éléments de délimitation (2), est supporté sur les éléments de délimitation (2) en une position d'inclinaison s'écartant de la verticale sur le fond de l'espace de réception, et peut être bloqué dans plusieurs positions le long des éléments de délimitation (2), **caractérisé en ce que** les éléments de délimitation (2) et l'élément de séparation (1) sont reliés respectivement entre eux par un mécanisme de retenue (7, 8) autobloquant, constitué d'une saillie latérale sur l'un des éléments et d'un évidement recevant la saillie sur l'autre élément, le composant de ce mécanisme de retenue réalisé sur l'élément de délimitation (1) étant conformé en une baguette longitudinale et/ou un évidement longitudinal, et les composants du mécanisme autobloquant étant dimensionnés dans une direction qui s'étend de façon essentiellement perpendiculaire à l'extension longitudinale et perpendiculaire à l'extension transversale de l'espace de réception de telle sorte que, dans une position de l'élément de séparation (1) orientée perpendiculairement par rapport au fond de l'espace de réception, un jeu permettant un déplacement de ce dernier est présent entre les composants du mécanisme autobloquant et la position d'inclinaison de l'élément de séparation (1) par rapport à la verticale sur le fond de l'espace de réception est définie par le seul mécanisme autobloquant (7, 8).

2. Dispositif suivant la revendication 1, **caractérisé en ce qu'**un équipement de guidage parallèle (9) s'appliquant sur les éléments de délimitation (2) est réalisé sur l'élément de séparation (1).

3. Dispositif suivant la revendication 1, **caractérisé en ce que** l'élément de séparation (1) est une tôle comprenant une partie supérieure et une zone de pied, lequel présente bilatéralement sur le côté à chaque fois un évidement (8), dans lequel vient en prise respectivement une baguette (7) réalisée latéralement sur l'élément de délimitation (2) voisin.

4. Dispositif suivant la revendication 3, **caractérisé en ce qu'**un prolongement (9) coudé de façon essentiellement verticale par rapport à la zone de pied est réalisé sur l'extrémité inférieure de la zone de pied de l'élément de séparation (1), lequel prolongement est guidé latéralement sur les éléments de délimitation voisins (2).

5. Dispositif suivant la revendication 4, **caractérisé en ce qu'**une gorge longitudinale (10) est réalisée dans au moins l'un des éléments de délimitation (2) dans une position en hauteur qu'occupe le prolongement (9) de l'élément de séparation (1) dans la position, verticale par rapport au fond du compartiment de réception, de l'élément de séparation (1), et qui a une largeur plus grande que l'épaisseur du prolongement (9).

6. Dispositif suivant la revendication 5, **caractérisé en ce que** l'évidement (8) sur le côté de la tôle (1) opposé à la gorge (10) est plus grand d'environ la profondeur de gorge que la profondeur de la baguette voisine (7).

7. Dispositif suivant l'une des revendications 3 à 6, **caractérisé en ce que** les éléments de délimitation (2) sont constitués de profilés analogues à des rails de chemin de fer, dont les têtes de rails (7) s'insèrent latéralement dans les évidements (8) sur l'élément de séparation (1).

8. Dispositif suivant la revendication 1, **caractérisé en ce que** les éléments de délimitation (2) sont constitués de profilés analogues à des rails de chemin de fer, dans l'espace situé au-dessous de la tête de rail (7) et délimité latéralement par l'âme (6) desquels s'insère respectivement une saillie (9a) réalisée latéralement sur l'élément de séparation (1).

9. Dispositif suivant la revendication 8, **caractérisé en ce que** l'élément de séparation (1) est formé d'une tôle constituée d'une partie supérieure et d'une zone de pied reliée à une baguette de pied (14) s'étendant entre les éléments de délimitation (2), laquelle baguette est en saillie bilatérale par rapport à la tôle (1) et s'insère dans l'espace situé au-dessous de la tête de rail (7) et limité latéralement par l'âme (6).

10. Dispositif suivant l'une des revendications 3 à 9, **caractérisé en ce que** les éléments de délimitation (2) sont en aluminium anodisé.

11. Dispositif suivant l'une des revendications précédentes, **caractérisé en ce que** l'élément de séparation (1) est en tôle revêtue par poudre.

12. Dispositif suivant l'une des revendications précédentes, **caractérisé en ce que** la position d'inclinaison de l'élément de séparation (1) s'écarte d'environ 15° par rapport à la verticale sur le fond du compartiment de réception.
